# EUROPÄISCHE PATENTANMELDUNG

(11) **EP 3 569 384 A1**
(43) Veröffentlichungstag der Anmeldung: **20.11.2019**
(21) Anmeldenummer: 19170769.4
(22) Anmeldetag: 24.04.2019
(51) Int. Cl.: B29C 48/285, B29C 48/385, B29C 48/395, B29C 48/50, B29C 48/68, B29C 48/295

(54) **VORRICHTUNG ZUM EXTRUDIEREN VON FASERVERSTÄRKTEN KUNSTSTOFFEN**

(30) Priorität: 18.05.2018 EP 18173156
(71) Anmelder: Arenz GmbH, 53340 Meckenheim (DE); Universität Paderborn, 33098 Paderborn (DE)
(72) Erfinder: Olbrich, Thomas, 53359 Rheinbach (DE); Altendorf, Frank, 53359 Rheinbach (DE); Moritzer, Elmar, 33175 Bad Lippspringe (DE); Wittke, Marius, 33098 Paderborn (DE)
(74) Vertreter: Patentanwälte Dörner & Kötter PartG mbB

(57) **Zusammenfassung**

Die Erfindung betrifft eine Vorrichtung zur Extrusion von mit Additiven gefüllten Thermoplasten zum Spritzgießen von Kunststoffformteilen, mit einer einen Extruderzylinder (11) und eine in diesem um eine Längsachse drehbar angeordnete Extruderschnecke (5) aufweisenden Plastifizierungseinrichtung und einer in dem Extruderzylinder (11) mündenden Zuführeinrichtung (3) für ein Additiv, wobei die Extruderschnecke (5) einen Plastifizierungsbereich und einen Additivbereich aufweist, die durch eine Dekompressionszone miteinander verbunden sind, wobei die Zuführeinrichtung (3) eine Fördereinrichtung aufweist, die als Doppelschnecke ausgeführt ist, deren Schnecken mit einem Getriebe (36) verbunden sind. Die Erfindung weist weiterhin ein Verfahren zur Extrusion von mit Additiven gefüllten Thermoplasten zum Spritzgießen von Kunststoffformteilen mit einer solchen Vorrichtung.

## Beschreibung

Die Erfindung betrifft eine Vorrichtung zur Extrusion von mit Additiven gefüllten Thermoplasten zum Spritzgießen von Kunststoffformteilen, mit einer einen Extruderzylinders und eine in diesem um eine Längsachse drehbar angeordnete Extruderschnecke aufweisenden Plastifizierungseinrichtung und einer in dem Extruderzylinder mündenden Zuführeinrichtung für ein Additiv. Die Erfindung betrifft weiterhin ein Verfahren zur Extrusion von mit Additiven gefüllten Thermoplasten zum Spritzgießen von Kunststoffformteilen mit einer solchen Vorrichtung nach dem Patentanspruch 14.

Zum Spritzgießen von Kunststoffformteilen kommen regelmäßig Spritzmodule zum Einsatz, die eine Extruderschnecke, auch allgemein Schneckenwelle oder Schnecke genannt, umfassen, die in einem Extruderzylinder verschiebbar gelagert ist. Der Innendurchmesser des Extruderzylinders entspricht dabei im Wesentlichen dem Außendurchmesser der Extruderschnecke. Im hinteren Bereich des Extruderzylinders ist ein Trichter zur Zuführung von Kunststoffgranulat angeordnet, in den das Kunststoffgranulat eingefüllt wird und durch eine Öffnung in den Extruderzylinder gelangt. Die Extruderschnecke wird von einem Antrieb in Rotation versetzt und transportiert so das Kunststoffgranulat vorwärts. Dabei wird der Extruderzylinder mittels elektrischer Heizbänder von außen erwärmt. Durch diese Erwärmung und durch die Schneckengeometrie wird das Granulat geschert und nach vorne befördert, wobei der Kunststoff plastifiziert und homogenisiert wird. Am vorderen Ende des Extruderzylinders ist eine Düse angeordnet, die in ein Formwerkzeug mündet. Im Prozess wird die Formmasse durch eine an der Extruderschnecke angeordnete Rückstromsperre bis zur Düse transportiert und davor gestaut. Die Extruderschnecke wird dabei axial mit einem Staudruck beaufschlagt, wobei sie sich in Richtung des Einfülltrichters verschieben kann und sich so zwischen Rückstromsperre und Düse ein Vorraum bildet, in dem die Formmasse zum Einspritzen angestaut ist. Der Staudruck wirkt gegen die Schmelze, so dass diese verdichtet wird. Durch den Druck, den die Schmelze ausübt, wird die Extruderschnecke zurückbewegt. Beim Einspritzvorgang wird die Extruderschnecke sodann axial zur Düse hinbewegt, wobei sich die Rückstromsperre schließt und so die Kunststoffmasse durch die Düse in das Werkzeug gespritzt wird. Spritzgießvorrichtungen der vorgenannten Art sind beispielsweise in der DE 202 12 963 U1 beschrieben.

Zur Herstellung von Leichtbauteilen ist es bekannt, dem Kunststoffgranulat Additive wie Glasfasermaterial beizufügen. Zur Herstellung feuerresistenter Bauteile werden als Additiv auch Flammschutzmittel beigemischt. Dabei hat sich gezeigt, dass insbesondere durch den Einsatz von Langfasermaterial mit einer Faserlänge von etwa 10-15 mm eine besonders hohe Zugfestigkeit bei gleichzeitig geringem Bauteilgewicht erzielbar ist. Um eine homogenen Vermischung des Additivs mit der Kunststoffmasse zu erzielen, kommen hier regelmäßig teure Doppelschneckenextruder zum Einsatz. Durch die im Zwickel entstehenden Schubspannungen erfolgt hier eine Desagglomeration des Additivs in der Kunststoffmasse, wodurch eine homogene Verteilung des Additivs gefördert wird. Beim Einsatz von Doppelschneckenextrudern ergeben sich jedoch erhebliche Beeinträchtigungen des Additivs durch Scherungsprozesse zwischen Additiv und Doppelschnecken sowie zugleich auch Reibungsprozesse zwischen Additiv und Kunststoffmaterial.

Hier will die Erfindung Abhilfe schaffen. Der Erfindung liegt die Aufgabe zu Grunde, eine Vorrichtung zum Spritzgießen von Faserverbundkunststoffformteilen bereitzustellen, welche eine homogene Verteilung zugegebener Additive in der Kunststoffmasse bei gleichzeitiger Schonung der Additive im Prozess ermöglicht. Gemäß der Erfindung wird diese Aufgabe durch die Merkmale des kennzeichnenden Teils des Patentanspruchs 1 gelöst.

Mit der Erfindung ist eine Vorrichtung zum Spritzgießen von Faserverbundkunststoffformteilen bereitgestellt, die eine homogene Verteilung zugegebener Additive in der Kunststoffmasse bei gleichzeitiger Schonung der Additive im Prozess ermöglicht. Dadurch, dass nur eine Extruderschnecke vorhanden ist, die einen Plastifizierungsbereich und einen Additivbereich aufweist, die durch eine Dekompressionszone miteinander verbunden sind, sind die Kosten der Vorrichtung reduziert. Dadurch, dass die Zuführeinrichtung eine Fördereinrichtung aufweist, die als Doppelschnecke ausgeführt ist, deren Schnecken mit einem Getriebe verbunden sind, erfolgt die Desagglomeration des Additivs bereits während der Förderung vor der Zugabe zur Kunststoffmasse, wodurch Reibungs- und Scherprozesse zwischen Kunststoffmaterial und Additiv vermieden sind. Zudem hat sich gezeigt, dass durch die trockene Desagglomeration außerhalb der Kunststoffmatrix ein Aufspleißen der Additive bewirkt ist, ohne diese jedoch zu zerstören.

Das desagglomerierte Additiv kann unmittelbar nach dessen Aufgabe homogen mit der Kunststoffmasse vermischt werden. Bevorzugt sind die Schnecken der Doppelschnecke über das Getriebe gleichsinnig drehend antreibbar. Besonders bevorzugt weist die Doppelschnecke eine dichtkämmende Schneckenanordnung mit engem Scherspalt auf.

In Weiterbildung der Erfindung sind die Schnecken der Doppelschnecke wechselbar mit dem Getriebe verbunden. Hierdurch ist eine einfache Einstellung des Scherspaltes der Doppelschnecke im Hinblick auf den Grad der Aufspleißung des Additivs ermöglicht.

In Ausgestaltung der Erfindung ist die Doppelschnecke in einem Kanal mit achtförmigem Querschnitt angeordnet. Hierdurch ist eine spiralförmige Bewegung der Kunststoffmasse entlang der achtförmigen Zylinderwand erzielt.

In weiterer Ausgestaltung der Erfindung nimmt der Kanal einen wechselbaren Einsatz mit achtförmigem Querschnitt auf. Hierdurch ist eine einfache Anpassung des Kanals auf die jeweils eingesetzten Doppelschnecken ermöglicht.

In Weiterbildung der Erfindung weisen die Schnecken der Doppelschnecke ein Verhältnis der Schneckenlänge zum Schneckendurchmesser von 25 bis 30 auf. Hierdurch ist ein hoher Desagglomerationsgrad erzielt.

In Ausgestaltung der Erfindung ist die Zuführeinrichtung im Bereich der Dekompressionszone gasdicht mit dem Extruderzylinder verbunden. Hierdurch ist ein Sauerstoffeintrag in die Kunststoffmasse vermieden. Insbesondere bei der Extrusion von Polyamid führt ein Sauerstoffeintrag zur Zersetzung des Kunststoffmaterials, wodurch Qualitätseinbußen bewirkt sind.

In Weiterbildung der Erfindung ist die Zuführeinrichtung mit einem Inertgaseinlass versehen, der bevorzugt nahe der Mündung der Zuführeinrichtung in den Extruderzylinder angeordnet ist. Hierdurch ist ein Extrusionsprozess unter Sauerstoffausschluss ermöglicht, wodurch einer Zersetzung des Kunststoffmaterials weiter entgegengewirkt ist.

In Ausgestaltung der Erfindung ist wenigstens eine Dosiervorrichtung angeornet, die gasdicht mit der Zuführeinrichtung verbunden ist. Hierdurch ist einem Sauerstoffeintrag in den Extrusionsprozess weiter entgegengewirkt.

In weiterer Ausgestaltung der Erfindung weist die Zuführeinrichtung einen beheizbaren Zylinder auf, in dem die Schnecken der als Doppelschnecke ausgebildete Fördereinrichtung (Doppelförderschnecke) angeordnet ist. Hierdurch ist eine Temperierung des Additivs vor dem Eintrag in die Kunststoffmatrix ermöglicht. Bevorzugt ist die Zuführeinrichtung Bestandteil eines Seitenaggregats, das orthogonal zum Extruderzylinder angeordnet ist.

In weiterer Ausgestaltung der Erfindung ist die Extruderschnecke als Sechszonenschnecke ausgebildet, deren Plastifizierungsbereich die Geometrie einer Barriereschnecke oder einer konventionellen Dreizonenschnecke aufweist, wobei das Gangsteigungs- zu Durchmesserverhältnis im Falle der konventionellen Dreizonenschnecke bevorzugt gleich 1 ist. Die Ausbildung des Plastifizierungsbereichs in Art einer Barriereschnecke bewirkt eine erhöhte Aufschmelzleistung pro Drehzahl. Hierdurch kann die Länge der Extruderschnecke minimiert werden, wodurch eine Verkürzung des Extrusionsprozesses bewirkt ist. Insbesondere Polyamid, dass ein sehr wärmebedürftiges Material darstellt (d.h. es benötigt viel Wärme zu dessen Aufschmelzung), darf nicht zu lange erhitzt werden, da sonst Qualitätseinbußen die Folge sind.

Der vorliegenden Erfindung liegt weiterhin die Aufgabe zugrunde, ein Verfahren zum Spritzgießen von Faserverbundkunststoffformteilen bereitzustellen, welches eine homogene Verteilung zugegebener Additive in der Kunststoffmasse bei gleichzeitiger Schonung der Additive im Prozess ermöglicht. Gemäß der Erfindung wird diese Aufgabe durch ein Verfahren mit den Merkmalen des Patentanspruchs 14 gelöst.

Mit der Erfindung ist ein Verfahren zum Spritzgießen von Faserverbundkunststoffformteilen bereitgestellt, welches eine homogene Verteilung zugegebener Additive in der Kunststoffmasse bei gleichzeitiger Schonung der Additive im Prozess ermöglicht. Dadurch, dass zunächst Kunststoffgranulat, insbesondere Polyamid dem Plastifizierungsbereich der Extruderschnecke des Extruderzylinders zugegeben wird, wonach das Kunststoffgranulat über die Länge des Plastifizierungsbereichs vollständig plastifiziert wird, nachfolgend das plastifizierte Kunststoffmaterial in Bereich der Dekompressionszone der Extruderschnecke dekomprimiert wird und dem dekomprimierten Kunststoffmaterial unter Luftausschluss über eine Doppelschnecke wenigstens ein Additiv zugegeben wird, wobei das wenigstens eine Additiv im Zuge der Förderung durch die Doppelschnecke in dieser außerhalb der in dem Extruderzylinder befindlichen Kunststoffmatrix desagglomeriert wird, wonach das wenigstens eine Additiv über den Additivbereich der Extruderschnecke mit der Kunststoffmasse vermischt wird, ist eine schonende Desagglomeration des Additivs bereits während der Förderung erzielt. Das bereits desagglomerierte Material wird sodann der Kunststoffmatrix zugeführt, wodurch eine homogene Durchmischung ermöglicht ist.

In weiterer Ausgestaltung der Erfindung wird das Additiv, insbesondere ein Glasfasermaterial oder ein Flammschutzmittel, unter Zugabe eines Inertgases, vorzugsweise Stickstoff, in den Extruderzylinder gefördert. Hierdurch ist ein Extrusionsprozess unter Ausschluss von Sauerstoff ermöglicht, wodurch einer Zersetzung des Kunststoffmaterials, insbesondere Polyamid entgegengewirkt ist. Andere Weiterbildungen und Ausgestaltungen der Erfindung sind in den übrigen Unteransprüchen angegeben. Ein Ausführungsbeispiel ist in den Zeichnungen dargestellt und wird nachfolgend im Einzelnen beschrieben. Es zeigen:
- Figur 1: die schematische Darstellung einer Vorrichtung zum Spritzgießen von Faserverbundkunststoffformteilen;
- Figur 2: die schematische Darstellung der Extruderschnecke der Vorrichtung aus Figur 1;
- Figur 3: die schematische Darstellung der Zuführeinrichtung der Vorrichtung aus Figur 1 in der Draufsicht;
- Figur 4: die schematische Darstellung der Zuführeinrichtung aus Figur 3 im Längsschnitt und

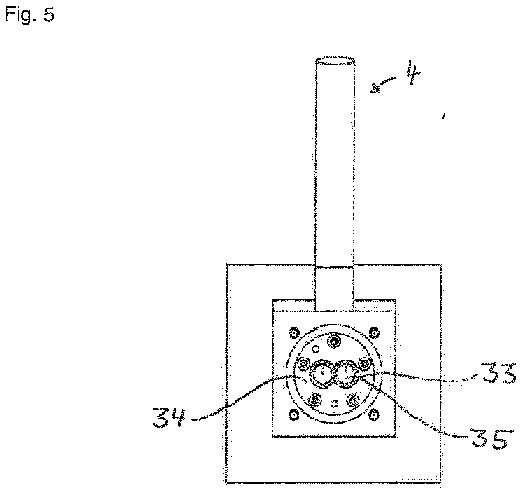

- Figur 5: die schematische Darstellung der Zuführeinrichtung aus Figur 3 im Bereich der Dosierzuführung im Querschnitt.

Die als Ausführungsbeispiel gewählte Vorrichtung zum Spritzgießen von Faserverbundkunststoffformteilen besteht im Wesentlichen aus einem Extrudermodul 1, der mit einem Seitenaggregat 2 versehen ist, das eine Zuführeinrichtung 3 sowie eine Dosiereinrichtung 4 umfasst.

Das Extrudermodul 1 ist als Einschneckenextruder ausgebildet und umfasst einen Extruderzylinder 11, in dem eine Extruderschnecke 5 über einen mit dieser verbundenen - nicht dargestellten - Antrieb rotierbar angeordnet ist. Der Extruderzylinder 11 ist außen umlaufend mit - nicht dargestellten - Heizbändern versehen, deren Heizleistung durch in den Mantel des Extruderzylinders 11 weiterhin angeordnete Heizwendeln noch verstärkt wird. Endseitig ist an dem Extruderzylinder 11 ein Einfülltrichter 12 angeordnet, der in dem Extrusionsraum des Extruderzylinders 11 mündet. Der Einfülltrichter 12 dient der Zuführung von plastifizierbarem Kunststoffgranulat.

Beabstandet zu dem Einfülltrichter 12 ist an dem Extruderzylinder 11 die Zuführeinrichtung 3 des Seitenaggregats 2 angeordnet. Die Zuführeinrichtung 3 umfasst einen Zuführzylinder 31, der über ein Flanschteil 32 im Bereich der Dekompressionszone 54 der Extruderschnecke 5 des Extrudermoduls 1 mit dem Extruderzylinder 11 gasdicht verbunden ist und der entlang seiner Mittellängsachse einen Doppelschneckenkanal 33 mit achtförmigem Querschnitt aufweist. Im Ausführungsbeispiel ist der Zuführzylinder 3 beheizbar ausgeführt.

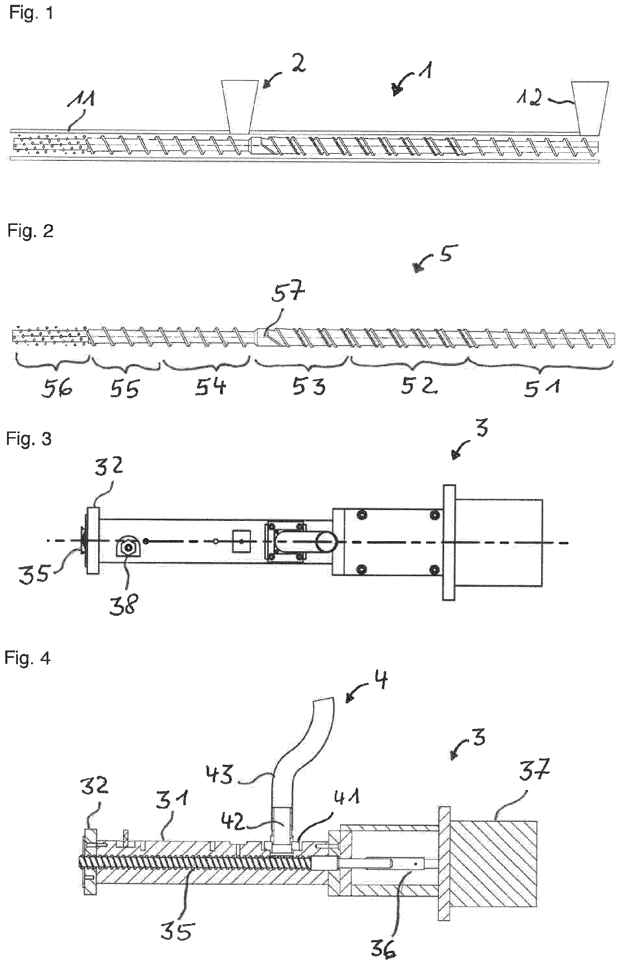

Um den Doppelschneckenkanal 33 des Zuführzylinders 31 an die einzusetzende Doppelförderschneckenanordnung anzupassen, ist in diesen ein wechselbarer Einsatz 34 mit achtförmigem Querschnitt eingesetzt. Durch die Verwendung unterschiedlicher wechselbarer Einsätze 34 sind mit einem Getriebe 36 verschiedene Förderschneckenachsabstände realisierbar. Im Ausführungsbeispiel sind in den Einsatz 34 die beiden Schnecken 35 einer dichtkämmenden Doppelförderschneckenanordnung mit engem Scherspalt eingebracht. Die beiden Schnecken 35 sind wechselbar mit einem - in Figur 4 lediglich angedeuteten - Getriebe 36 verbunden, über das sie gleichsinnig drehend antreibbar sind. Das Getriebe 36 ist hierzu mit einem Antrieb 37 verbunden. Durch die wechselbare Anordnung der Doppelförderschneckenanordnung ist auch der wahlweise Einsatz einer tangierenden Schneckengeometrie anstelle einer dichtkämmenden Schneckengeometrie möglich.

Die Förderschnecken 35 sind durch das Flanschteil 32 geführt und münden in eine hierfür in dem Extruderzylinder 11 vorgesehene Einlassöffnung. Im Ausführungsbeispiel weisen die Schnecken 35 der Doppelförderschneckenanordnung ein Verhältnis der Schneckenlänge zum Schneckendurchmesser von 27 auf. Im Bereich der Mündung der Zuführeinrichtung 3 in den Extruderzylinder 11 ist an dem Zuführzylinder 31 ein Inertgaseinlass 38 angeordnet, an den eine Inertgasquelle, insbesondere eine Stickstoffquelle anschließbar ist. Das Flanschteil 32 ist über eine keramische Dichtung gegenüber dem Extruderzylinder 11 gasdicht abgedichtet.

An dem Zuführzylinder 31 ist eine - lediglich angedeutete - Dosiereinrichtung 4 zur dosierten Abgabe eines Additivs in den Zuführzylinder 31 angeordnet, die über einen Flansch 41 gasdicht mit dem Zuführzylinder 31 verbunden ist und die einen Dosierstutzen 42 aufweist, der über eine hierzu in dem Zuführzylinder 31 vorgesehene Dosieröffnung in den Doppelschneckenkanal 33 hineinragt. Der Einsatz 34 weist eine Öffnung auf, die mit der Dosieröffnung des Zuführzylinders 31 fluchtet, sodass ein Zugang zu den in dem Einsatz 34 angeordneten Schnecken 35 der Doppelförderschneckenanordnung gebildet ist. Für die Zuleitung eines Additivs in den Zuführzylinder 31 ist auf den Dosierstutzen 42 ein Dosierrohr 43 aufgesteckt. An dem Zuführzylinder 31 können auch mehrere Dosiereinrichtungen 4 angeordnet sein (beispielsweise für die Zuführung sowohl von Flammschutzmittel als auch von Glasfasermaterial).

Im Bereich des ersten Drittels des Zuführzylinders 31, dessen Einschraubtiefe bis höchstens 5 mm an den Schneckenkanal des Extruderzylinders 11 heranragt, ist im Ausführungsbeispiel ein - nicht dargestellter - Drucksensor angeordnet, der mit der - nicht dargestellten - Steuerung des Extrudermoduls 1 verbunden ist. Der Drucksensor wird genutzt, um im Falle eines Flutens des Extruderzylinders 11 (zu hoher Gegendruck) eine Notabschaltung auszulösen. Die Beheizung des Zuführzylinders 31 des Seitenaggregats 3 verhindert ein Verstopfen der Doppelschneckenanordnung durch Erstarren eintretender Schmelze aus dem Einschneckenextruder.

Die Extruderschnecke 5 ist in Figur 2 dargestellt. Sie weist im Ausführungsbeispiel eine Länge auf, die das 30 bis 36-fache ihres Durchmessers (30-36D) beträgt. Die Schneckengeometrie der Extruderschnecke 5 weist insgesamt sechs Zonen auf, wobei die ersten drei Zonen (erste Schneckenabschnitt) entsprechend der Schneckengeometrie einer konventionellen Dreizonenschnecke eine Einzugszone 51, eine Kompressionszone 52 und eine Meteringzone 53 aufweist, hieran schließt sich der zweite Schneckenabschnitt mit einer durchmesserreduzierten Dekompressionszone 54 mit anschließender Meteringzone 55 an, gefolgt von einer wendelfreien Homogenisierungszone 56. Im Ausführungsbeispiel ist die Extruderschnecke 5 als Barriereschnecke ausgebildet, wobei im Bereich der Kompressionszone 52 ein zusätzlicher Barrieresteg 531 eingefügt ist, der den Feststoff von der Schmelze trennt. Durch den Barrieresteg 531 wird der Austritt von unaufgeschmolzenen Kunststoffpartikeln aus der Kompressionszone 52 verhindert, wodurch eine gut aufgeschlossene Kunststoffschmelze gewährleistet ist. Alternativ kann die Extruderschnecke 5 auch im Bereich der ersten drei Zonen in Art einer konventionellen Dreizonenschnecke mit einem Gangsteigungs- zu Durchmesserverhältnis von 1 (= optimale Förderwirkung) ausgebildet sein. Im Übergang vom ersten Schneckenabschnitt zum zweiten Schneckenabschnitt befindet sich ein Scherteil 57. Das Scherteil 57 dient der Desagglomeration letzter Feststoffreste. Im Anschluss an das Scherteil 57 nimmt die Schneckentiefe signifikant zu, um eine Teilfüllung zu erreichen.

Die ersten beiden Drittel der Extruderschnecke 5 (20-24D) dienen zum Plastifizieren des Kunststoffgranulats. Das vordere Drittel der Schnecke dient zur Aufnahme der Additive und zur Homogenisierung und Komprimierung derselben. Die Kompression ist erforderlich, um etwaige Werkzeugwiderstände eines angeschlossenen - nicht dargestellten - Werkzeugs überfahren zu können. Die Homogenisierung ist notwendig, um eine konstante und hochwertige Schmelzqualität zu erzeugen.

Die gravimetrisch ausgeführten Dosiereinrichtungen 4 können gegendruckunabhängig arbeiten. Da das als Einschneckenextruder ausgeführte Extrudermodul 1 aufgrund der teilgefüllten Dekompressionszone 54 nur drehzahl- und temperaturabhängig arbeitet, lässt sich eine Rezeptur für einen bestimmten Durchsatz des Einschneckenextruders und damit gegendruckunabhängig einstellen.

Zur Extrusion von mit Additiven gefüllten Thermoplasten, insbesondere Polyamid wird thermoplastisches Kunststoffgranulat über den Einfülltrichter 12 in den Extruderzylinder 11 gegeben und über die rotierend angetriebene Extruderschnecke 11 in Richtung Zuführeinrichtung 31 gefördert. Im Bereich der Einzugszone 51 und der Kompressionszone 52 wird das Kunststoffgranulat aufgeschmolzen und gelangt in die Meteringzone 53, wo über das Scherteil 57 letzte Kunstsoff-Feststoffe desagglomeriert werden. Die Kunststoffschmelze gelangt nun in die Dekompressionszone 54, eine teilgefüllten Zone, wo eine Zuführung von Additiv durch die Zuführungsvorrichtung 3 des Seitenaggregats 2 erfolgt. Das Additiv wird über die Dosiereinrichtung 4 in den Doppelschneckenkanal 33 des Zuführzylinders 31 der Zuführungsvorrichtung 3 aufgegeben, wo es durch die beiden Schnecken 35 der dichtkämmenden Doppelförderschneckenanordnung mit engem Scherspalt in den Extruderzylinder 11 gefördert wird. Während der Förderung wird das Additiv durch die gleichsinnig angetriebenen Schnecken 35 schonend desagglomeriert, bevor es in der teilgefüllten Dekompressionszone 54 in die Kunststoffschmelze gelangt. Zur Vermeidung von Oxidation wird während des gesamten Prozesses über den Inertgaseinlass 38 zur Überdruckbegasung Stickstoff mit einem Druck von maximal 3 bis 5 bar in den Doppelschneckenkanal 33 und damit in die teilgefüllte Zone des Extrudermoduls 1 eingebracht.

Die Kunststoffschmelze wird mit den eingebrachten Additiven sodann durch die Meteringzone 55 gefördert und in der Homogenisierungszone 56 homogenisiert. Zur schonenden Homogenisierung können tiefgeschnittene Rautenmischelemente oder Sondermischelemente an der Extruderschnecke 5 angeordnet sein. Als Sondermischelemente kommen rückläufige Mischelemente mit Stegdurchbrüchen in Frage. Sinnvoll ist der Einsatz von acht bis zehn Durchbrüchen pro Umdrehung mit einem resultierenden Bogenmaß von Pi als projizierte Fläche. Die so mit den Additiven versehene homogenisierte Kunststoffschmelze wird sodann über eine - nicht dargestellte - Düse in ein - nicht dargestelltes - Werkzeug eingespritzt.

## Patentansprüche

1. Vorrichtung zur Extrusion von mit Additiven gefüllten Thermoplasten zum Spritzgießen von Kunststoffformteilen, mit einer einen Extruderzylinder (11) und eine in diesem um eine Längsachse drehbar angeordnete Extruderschnecke (5) aufweisenden Plastifizierungseinrichtung und einer in dem Extruderzylinder (11) mündenden Zuführeinrichtung (3) für ein Additiv, **dadurch gekennzeichnet, dass** die Extruderschnecke (5) einen Plastifizierungsbereich und einen Additivbereich aufweist, die durch eine Dekompressionszone (54) miteinander verbunden sind, wobei die Zuführeinrichtung (3) eine Fördereinrichtung aufweist, die als Doppelschnecke ausgeführt ist, deren Schnecken (35) mit einem Getriebe (36) verbunden sind.

2. Vorrichtung nach Anspruch 1, **dadurch gekennzeichnet, dass** die Schnecken (35) der Doppelschnecke über das Getriebe (36) gleichsinnig drehend antreibbar sind.

3. Vorrichtung nach Anspruch 1 oder 2, **dadurch gekennzeichnet, dass** die Schnecken (35) der Doppelschnecke wechselbar mit dem Getriebe (36) verbunden sind.

4. Vorrichtung nach einem der vorgenannten Ansprüche, **dadurch gekennzeichnet, dass** die Doppelschnecke in einem Kanal (33) mit achtförmigem Querschnitt angeordnet ist.

5. Vorrichtung nach Anspruch 4, **dadurch gekennzeichnet, dass** der Kanal (33) einen wechselbaren Einsatz (34) mit achtförmigem Querschnitt aufnimmt.

6. Vorrichtung nach einem der vorgenannten Ansprüche, **dadurch gekennzeichnet, dass** die Doppelschnecke eine dichtkämmende Schneckenanordnung mit engem Scherspalt aufweist.

7. Vorrichtung nach einem der vorgenannten Ansprüche, **dadurch gekennzeichnet, dass** die Schnecken (35) der Doppelschnecke ein Verhältnis der Schneckenlänge zum Schneckendurchmesser von 25 bis 30 aufweist.

8. Vorrichtung nach einem der vorgenannten Ansprüche, **dadurch gekennzeichnet, dass** die Zuführeinrichtung (3) im Bereich der Dekompressionszone (54) gasdicht mit dem Extruderzylinder (11) verbunden ist.

9. Vorrichtung nach einem der vorgenannten Ansprüche, **dadurch gekennzeichnet, dass** die Extruderschnecke als Sechszonenschnecke ausgebildet ist, deren Plastifizierungsbereich die Geometrie einer Barriereschnecke oder einer konventionellen Dreizonenschnecke aufweist, wobei das Gangsteigungs- zu Durchmesserverhältnis im Falle der konventionellen Dreizonenschnecke bevorzugt gleich 1 ist.

10. Vorrichtung nach Anspruch 8 oder 9, **dadurch gekennzeichnet, dass** die Zuführeinrichtung (3) mit einem Inertgaseinlass (38) versehen ist, der bevorzugt nahe der Mündung der Zuführeinrichtung (3) in den Extruderzylinder (11) angeordnet ist.

11. Vorrichtung nach einem der vorgenannten Ansprüche, **dadurch gekennzeichnet, dass** wenigstens eine Dosiervorrichtung (4) angeordnet ist, die gasdicht mit der Zuführeinrichtung (3) verbunden ist.

12. Vorrichtung nach einem der vorgenannten Ansprüche, **dadurch gekennzeichnet, dass** die Zuführeinrichtung (3) einen beheizbaren Zylinder (31) aufweist, in dem die Schnecken (35) angeordnet sind.

13. Vorrichtung nach einem der vorgenannten Ansprüche, **dadurch gekennzeichnet, dass** die Zuführeinrichtung (3) Bestandteil eines Seitenaggregats (2) ist, das orthogonal zum Extruderzylinder (11) angeordnet ist.

14. Verfahren zur Extrusion von mit Additiven gefüllten Thermoplasten zum Spritzgießen von Kunststoffformteilen mit einer Vorrichtung nach einem der vorgenannten Ansprüche, wobei zunächst Kunststoffgranulat, insbesondere Polyamid dem Plastifizierungsbereich der Extruderschnecke (5) des Extruderzylinders (11) zugegeben wird, wonach das Kunststoffgranulat über die Länge des Plastifizierungsbereichs vollständig plastifiziert wird, nachfolgend das plastifizierte Kunststoffmaterial in Bereich der Dekompressionszone (54) der Extruderschnecke (5) dekomprimiert wird und dem dekomprimierten Kunststoffmaterial unter Luftausschluss über eine Doppelschnecke wenigstens ein Additiv zugegeben wird, wobei das wenigstens eine Additiv im Zuge der Förderung durch die Doppelschnecke in dieser, außerhalb der in dem Extruderzylinder 11 befindlichen Kunststoffmatrix desagglomeriert wird, wonach das wenigstens eine Additiv über den Additivbereich der Extruderschnecke mit der Kunststoffmasse vermischt wird.

15. Verfahren nach Anspruch 14, **dadurch gekennzeichnet, dass** das Additiv, insbesondere ein Glasfasermaterial oder ein Flammschutzmittel, unter Zugabe eines Inertgases, vorzugsweise Stickstoff, in den Extruderzylinder (11) gefördert wird.
